# EUROPEAN PATENT SPECIFICATION

(11) **EP 4 704 408 B1**
(45) Date of publication and mention of the grant of the patent: **21.10.2026**
(21) Application number: 24197797.4
(22) Date of filing: 02.09.2024
(51) Int. Cl.: H04L 67/1095, H04L 67/1097, H04L 67/12, H04L 67/00

(54) **DATA REPLICATION AMONG A PLURALITY OF MARINE VESSEL ELECTRONIC CONTROL UNITS**
DATENREPLIKATION ZWISCHEN EINER VIELZAHL VON ELEKTRONISCHEN SCHIFFSSTEUEREINHEITEN
RÉPLICATION DE DONNÉES PARMI UNE PLURALITÉ D'UNITÉS DE COMMANDE ÉLECTRONIQUE DE NAVIRE

(43) Date of publication of application: 04.03.2026
(73) Proprietor: CPAC Systems AB, 401 23 Göteborg (SE)
(72) Inventor: BERGENWALL, Jonatan, 433 51 ÖJERSJÖ (SE)
(74) Representative: Ström & Gulliksson AB

(56) References cited:
- US-A1- 2016 011 863
- US-A1- 2017 168 800
- US-A1- 2019 391 800

## Description

### TECHNICAL FIELD

The disclosure relates generally to a data management in marine vessels. In particular aspects, the disclosure relates to data replication among a plurality of marine vessel electronic control units. The disclosure can be applied to marine vessels, such as leisure boats, ships, cruise ships, fishing vessels, yachts, ferries, among other vehicle types. Although the disclosure may be described with respect to a particular marine vessel, the disclosure is not restricted to any particular marine vessel.

### BACKGROUND

In modern marine vessels, electronic control units (ECUs) are vital for managing functions such as navigation, communication, engine control, safety systems, and the like. These ECUs must be regularly updated to maintain performance and compliance with standards.

Traditional ECU update approaches, typically employing central cloud servers, face challenges like transmission reliability, high data transfer costs, and security risks. These approaches also lack efficient data management across multiple ECUs, leading to redundant transfers, network congestion, and inconsistencies. Prior art approaches are especially cumbersome where updates to a plurality of marine vessels ECUs.

Prior art document US2017168800A1 discloses a system for reporting data and updating marine electronic peripheral device software. A marine electronics device provides a report function that captures and saves current settings information of the marine electronics device and peripheral devices in communication with the marine electronics device.

The present inventor has therefore identified a need for an improved approach with regards to the above-identified deficiencies of the prior art and others.

### SUMMARY

One issue with prior art solutions is the dependency on cloud-based data distribution. This approach requires a stable and secure internet connection, which may not always be available or reliable in marine environments. Factors such as remote locations, adverse weather conditions, and limited infrastructure can lead to intermittent or weak internet connectivity. Marine vessels often operate in areas far from shore where satellite connections may be the only option, and these can be costly, slow, and prone to disruptions. Additionally, navigating through storms or rough seas can further degrade signal quality, making it difficult to ensure timely and secure data transfers. The lack of internet connectivity can delay critical updates, compromising the vessel's performance and safety.

Additionally, the direct cloud-to-node data transfer can be slow and inefficient, especially when dealing with large data sets or multiple ECUs. This inefficiency is particularly troublesome in the marine industry, where limited bandwidth availability is a significant challenge compared to, for example, the automotive industry. Marine vessels often rely on satellite connections for internet access, which offer lower bandwidth and higher latency than terrestrial networks commonly used by vehicles on land. Transferring volumes of data over these constrained connections can result in delays, preventing timely updates and potentially compromising the vessel's operational efficiency. Furthermore, the simultaneous updating of multiple ECUs can lead to network congestion, exacerbating the problem by slowing down the data transfer process even more. This inefficiency not only impacts the performance of the ECUs but also increases the risk of incomplete or corrupted data transfers, thereby undermining the reliability and safety of the marine vessel.

Another drawback of existing approaches is the lack of a mechanism for efficiently managing data updates across multiple ECUs. In conventional setups, each ECU typically individually downloads and processes updates, leading to redundant data transfers and increased network congestion. This method not only consumes more bandwidth but also increases the risk of data inconsistencies and errors, as there is no centralized control over the update process. This issue is especially relevant in the marine industry, where bandwidth is often limited and expensive, which can make efficient data management even more important to maintaining operational efficiency and reliability.

Furthermore, the conventional approach to upload data to ECUs is often cumbersome and time-consuming. Each ECU must typically be manually updated, which can be a labor-intensive and error-prone process. This is particularly problematic in marine vessels with numerous ECUs, where a single update can disrupt operations for extended periods. Given the complexity and size of marine vessels compared to other industries, such as automotive, the impact of these disruptions can be more significant, affecting not only the vessel's performance but also its safety and compliance with regulatory standards. Efficient and reliable update mechanisms are therefore desired to minimize downtime and ensure continuous, smooth operation.

According to a first aspect of the disclosure, there is accordingly provided a computer system for replicating data among a plurality of electronic control units, ECUs, wherein the ECUs are connected to the same backbone network of a marine vessel, the computer system being according to claim 1.

The first aspect of the disclosure may seek to solve the problem of updating and managing data across multiple ECUs in marine vessels. A technical benefit may include improved data management and reduced network congestion, enabling faster updates and enhancing the overall performance and reliability of the marine vessel's electronic systems.

Optionally in some examples, including in at least one preferred example, the computer system is operable offline, the processing circuitry being operable to carry out the control of the ECUs agnostic to internet connectivity. A technical benefit may include ensuring reliable data replication and updates even in environments where internet connectivity is intermittent or unavailable, thereby enhancing the system's robustness and operational reliability.

Optionally in some examples, including in at least one preferred example, the processing circuitry is configured to control the first ECU to update the virtual data storage by setting up a fileserver in the virtual data storage and transferring the configuration data thereto, or updating an existing fileserver in the virtual data storage with the configuration data. A technical benefit of utilizing a fileserver in this way is that it centralizes and streamlines the data management process, allowing efficient and organized data storage and access, which facilitates seamless updates and minimizes redundancy and network congestion.

Optionally in some examples, including in at least one preferred example, the fileserver comprises a link accessible by said other ECUs to the configuration data stored in the data carrier device. A technical benefit may include simplifying the access and retrieval of configuration data by other ECUs.

Optionally in some examples, including in at least one preferred example, the control of said other ECUs to identify the data parts comprises, at said other ECUs: receiving a message from the virtual data storage indicating said update of the configuration data; identifying an absence of said update in a memory of said other ECUs; and controlling submission of said access request to the virtual data storage. A technical benefit may include ensuring that only necessary and relevant data parts are requested, improving the data transfer process.

Optionally in some examples, including in at least one preferred example, the processing circuitry is further configured to, prior to controlling the other ECUs to obtain the data parts, encrypt the data parts stored in the virtual data storage that is to be obtained by the other ECUs. A technical benefit may include enhancing the protection of the data and security of the data transfer process by ensuring that only authorized ECUs can access the data parts.

Optionally in some examples, including in at least one preferred example, the data carrier device is a removable storage device connectable to an input port of the first ECU, wherein the processing circuitry is configured to control the first ECU to update the virtual data storage with the configuration data in response to said data carrier device connecting to the first ECU. A technical benefit may include providing a straightforward and flexible method for updating the virtual data storage, and consequently all the ECUs that need updates, using a (single) removable storage device.

Optionally in some examples, including in at least one preferred example, wherein the data carrier device is an internal memory of the first ECU. A technical benefit may include enabling updates to the virtual data storage using the internal memory of the first ECU, providing an alternative method for data replication that can be useful where the system already has desired configuration data which other components of the system desires, such as for replacement of ECUs.

Optionally in some examples, including in at least one preferred example, the processing circuitry is configured to control the first ECU to update the virtual data storage in response to one or more of: a manual user input received at an ECU being a display device, a software functionality trigger automatically identifying the data carrier device, and a predetermined time period having lapsed. A technical benefit may include offering multiple trigger mechanisms for updating the virtual data storage, enhancing the flexibility and responsiveness of the system.

Optionally in some examples, including in at least one preferred example, the configuration data comprises one or more of software update data, firmware update data, user profile data, system data, diagnostic data, security patch data, operational data, calibration data, application data, and performance tuning data. A technical benefit may include ensuring comprehensive and versatile data updates by encompassing a wide range of configuration data types.

According to a second aspect of the disclosure, a marine vessel is provided. The marine vessel comprises the computer system of the first aspect.

The second aspect of the disclosure may seek to solve the problem of updating and managing data across multiple ECUs in marine vessels. A technical benefit may include improved data management and reduced network congestion, enabling faster updates and enhancing the overall performance and reliability of the marine vessel's electronic systems.

Optionally in some examples, including in at least one preferred example, the marine vessel further comprising one or more ECUs being connected to the same backbone network of the marine vessel, wherein the backbone network is based on Ethernet, and wherein the ECUs are wiredly connected to the backbone network. A technical benefit may include ensuring reliable and high-speed communication between ECUs through wired Ethernet connections.

According to a third aspect of the disclosure, a computer-implemented method is provided as claimed in claim 13. The method is for replicating data among a plurality of electronic control units, ECUs, wherein the ECUs are connected to the same backbone network of a marine vessel. The method comprises: controlling, by processing circuitry of a computer system, a first ECU from among the plurality of ECUs to update a virtual data storage based on configuration data from a data carrier device, the virtual data storage being locally accessible by one or more other ECUs from among the plurality of ECUs via the backbone network; and controlling, by the processing circuitry, the other ECUs to identify data parts of the configuration data that would cause one or more updates to data stored by said other ECUs, and obtain said one or more data parts of the configuration data responsive to a successful access request between said other ECUs and the virtual data storage.

The third aspect of the disclosure may seek to solve the problem of updating and managing data across multiple ECUs in marine vessels. A technical benefit may include improved data management and reduced network congestion, enabling faster updates and enhancing the overall performance and reliability of the marine vessel's electronic systems.

According to a fourth aspect of the disclosure, a computer program product is provided. The computer program product comprises program code for performing, when executed by the processing circuitry, the method of the third aspect.

The fourth aspect of the disclosure may seek to enable new marine vessels and/or legacy marine vessels to be conveniently configured, by software installation/update, to be updated and manage data across multiple ECUs. A technical benefit may include improved data management and reduced network congestion, enabling faster updates and enhancing the overall performance and reliability of the marine vessel's electronic systems.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect.

The fifth aspect of the disclosure may seek to enable new marine vessels and/or legacy marine vessels to be conveniently configured, by software installation/update, to be updated and manage data across multiple ECUs. A technical benefit may include improved data management and reduced network congestion, enabling faster updates and enhancing the overall performance and reliability of the marine vessel's electronic systems.

While the objects of the invention are defined by the appended independent claims, preferred embodiments are covered by the appended dependent claims.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 is an exemplary marine vessel according to an example.
FIG. 2 a schematic diagram of an exemplary computer system for data replication according to an example.
FIG. 3 is a flowchart illustration of a method for data replication.
FIG. 4 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

This disclosure invention addresses issues mentioned of the prior art described above relating to updating and managing data across multiple electronic control units (ECUs) in marine vessels. Approaches are described herein that introduce a centralized update mechanism where a first ECU is controlled to update, based on configuration data from a data carrier device, a virtual data storage. The virtual data storage is accessible to other ECUs of the marine vessel via a local backbone network interconnecting the ECUs. The other ECUs are then controlled to identify data parts of this configuration data that would cause one or more updates to data stored by the other ECUs, other ECUs, and to obtain said data parts responsive to a successful access request between said other ECUs and the virtual data storage.

This approach may leverage the reliable, stable and secure backbone network within the vessel, thus offering locality of operations. By allowing the first ECU to update the virtual data storage and enabling other ECUs to identify and download only necessary updates, the computer system can reduce redundant data transfers and network congestion. Automated processes may reduce manual intervention, making updates faster, more accurate, and less prone to errors. This centralized approach may accordingly reduce bandwidth consumption and operational costs, which can be particularly beneficial in marine environments where bandwidth is limited and costly. The ability to efficiently manage and distribute updates may enhance the overall reliability and safety of the marine vessel, leading to consistent and timely updated ECUs in the marine vessel. Ultimately, this can provide a robust, efficient, and reliable solution that addresses the limitations of prior art and enhances performance.

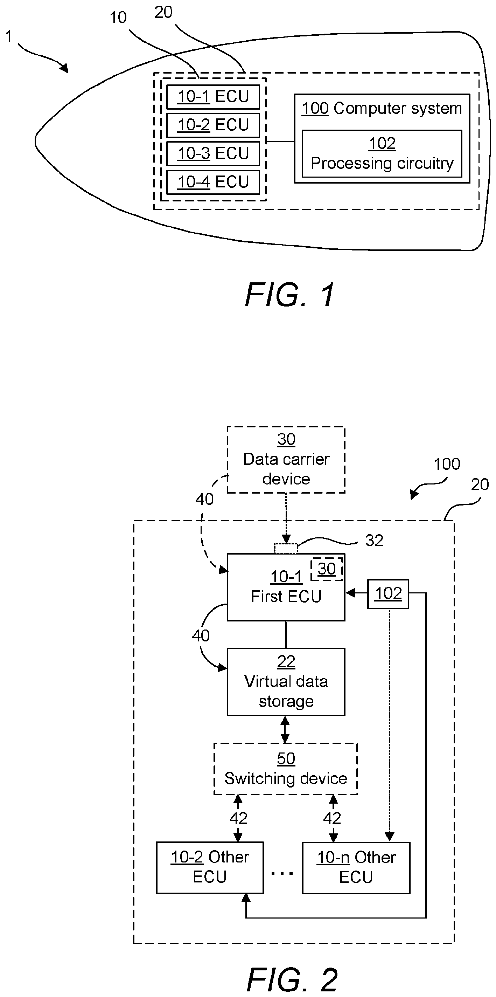

**FIG. 1** is an exemplary a marine vessel **1** where aspects and examples described herein can be applied. In non-limiting examples, the marine vessel **1** is a leisure boat, ship, cruise ship, fishing vessel, yacht, ferry, or the like. The marine vessel **1** is adapted to operate at bodies of water, e.g., a sea, ocean, lake, river, bay, gulf, strait, channel, reservoir, fjord, marsh, swamp, etc. The marine vessel **1** may be an electric marine vessel, gasoline-powered marine vessel, diesel-powered marine vessel, or the like.

The marine vessel **1** is equipped with a plurality of (i.e., more than one) electronic control units, ECUs **10.** In this example, the marine vessel **1** includes four ECUs labeled **10-1** through **10-4,** though typical marine installations often include many more ECUs **10.** The primary purpose of these ECUs **10** is to manage various functions critical to the operation, safety, and comfort of the vessel.

The ECUs **10** can include a variety of devices, each with specific roles. An ECU **10** may be a display device, managing visual outputs of navigational and operational data to the crew of the marine vessel **1.** An ECU **10** may be an engine control device, regulating an engine of the marine vessel **1,** including speed, fuel consumption, and diagnostics. An ECU **10** may be a navigation control device, managing a course and positioning of the marine vessel 1, for example using GPS and other navigational aids. An ECU **10** may be an autopilot control device, automatically steering the marine vessel **1** along a predetermined course. An ECU 10 may be a detection device (e.g. radar, lidar, sonar or camera), detecting and displaying objects on, near and/or under the water surface to aid in navigation and collision avoidance, or measure water depth. An ECU **10** may be a communication device, managing radio, satellite, and other communications for the marine vessel **1.** An ECU **10** may be a battery management device, monitoring and controlling battery systems of the marine vessel **1.** An ECU **10** may be a lighting control device, controlling the internal and external lighting systems of the marine vessel 1. An ECU **10** may be a climate control device, managing heating, ventilation, and air conditioning (HVAC) systems to maintain a comfortable environment in and around the marine vessel 1. An ECU **10** may be a fuel management device, monitoring fuel levels and consumption. An ECU **10** may be a thruster control device, managing operations of bow and stern thrusters to assist in docking and maneuvering. An ECU **10** may be a stabilizer control device, controlling stabilizing fins or gyroscopes to reduce vessel roll and improve comfort. An ECU **10** may be a hydrofoil control device, managing the deployment and control of hydrofoils. An ECU **10** may be an anchor control device, automating the deployment and retrieval of the anchor of the marine vessel **1.** An ECU **10** may be a pneumatic control device, managing systems that use compressed air for various functions, such as door operation or tool usage. Other types of ECUs known in the art can be envisaged.

Each ECU **10** is connected to a backbone network **20,** which serves as a common communication infrastructure for the marine vessel **1** and ECUs **10** thereof. The backbone network **20** allows the ECUs **10** to share data and coordinate their functions. Serving as the common communication infrastructure, the backbone network **20** provides the primary data pathways between different subsystems within the marine vessel **1** and acts as the main conduit for data transfer and communication. The backbone network **20** facilitates the exchange of data, control signals, and configuration updates between ECUs **10** and a computer system **100.** The backbone network **20** may support real-time monitoring, control, and coordination of the ECUs **10.**

The backbone network **20** is preferably an Ethernet network, providing high-speed and reliable data transfer capabilities, although the present disclosure supports the use of other backbone network protocols known in the art, such as CAN, NMEA 2000 NMEA 0183, J1939, or the like. Using one of these protocols, the ECUs **10** are wiredly connected. Wired connections, such as Ethernet cables, can provide high-speed, stable, and secure data transfer, are less susceptible to interference, and are desired in critical systems that seek reliable communication. Wired connections also support high bandwidth, making them suitable for transferring large data sets and ensuring real-time control.

Wireless connections between the ECUs **10** and the backbone network **20** is an alternative as well. Wireless connections, such as Wi-Fi, Zigbee, Bluetooth, etc., can offer flexibility and ease of installation. They eliminate the need for physical cables, reducing clutter and simplifying the network setup. Wireless connectivity may be beneficial for noncritical systems or in areas where cabling is impractical. It also provides mobility, allowing devices to connect and communicate without being tethered to a fixed location.

Combinations between wireless and wired solutions can also be provided. For example, ECUs **10** responsible for more critical functions (e.g. engine control) can be wiredly connected to the backbone network **20,** while ECUs **10** responsible less critical functions (e.g. climate control) can be wirelessly connected to the backbone network **20.** Nonetheless, these ECUs **10** are communicatively coupled via the backbone network **20.**

Storage locations within the backbone network **20,** such as virtual data storages, network-attached storages (NAS), distributed databases, etc., are accessible to the connected ECUs **10** via the backbone network **20.** In this disclosure this is referred to as being "locally accessible", i.e., locally within perimeters of the marine vessel **1.** These storages can hold configuration data, software updates, and other necessary files. The storage locations thus include a centralized repository for data that needs to be accessed or updated by multiple ECUs 10. The locally accessible storages within the backbone network **20** can ensure quick and efficient access the data they need. By centralizing these resources, data management can be streamlined and data redundancy reduced. This is particularly useful for updates, where each ECU **10** can check the storage for new configuration data and download only the parts that are relevant to them. This selective approach can reduce network congestion and the time to obtain and install updates. When an update is made to the data storage, the ECUs **10** can access the new data, ensuring that they are operating with the most current information.

Configuration data in contexts of the present disclosure may comprise one or more of software update data, firmware update data, user profile data, system data, diagnostic data, security patch data, operational data, calibration data, application data, and performance tuning data. This variety of data types can ensure that the ECUs **10** can address a wide range of updates and configurations necessary for an improved and/or maintained functioning. Software update data and firmware update data provide improvements and bug fixes for software and hardware components. User profile data and system data allow the system to personalize settings and maintain consistent operational parameters. Diagnostic data and security patch data help in identifying issues and securing the system against vulnerabilities. Operational data and calibration data ensure that the system operates efficiently and accurately. Application data and performance tuning data allow for specific functionalities and enhancements to be tailored to the vessel's needs. By encompassing this comprehensive range of data types, the configuration data can ensure that all aspects of the operation, performance and security of the ECUs **10** are maintained and/or improved.

The computer system **100,** comprising processing circuitry **102,** orchestrates the updating and management of data across the ECUs **10** by control thereof. The control of the ECUs **10** may be done by executing a series of operations that involve data acquisition, processing, and signal transmission. The computer system **100** acts as a central command unit, orchestrating the data update process by controlling the ECUs **10** to update virtual data storage(s), identify relevant data parts, and obtain the necessary updates. In alternative or additional examples, the logic of the computer system **100** and the processing circuitry **102** may be integrated with the ECU **10** that triggers the replication function (i.e., a first ECU as will be further discussed below. In alternative or additional examples, the logic of the computer system **100** and the processing circuitry **102** may be integrated with a data carrier device that can triggers the replication function (which will be discussed further below). Effectively, in these alternative or additional examples the computer system **100** and the first ECU **10** is the same unit, and/or the computer system **100** and the data carrier device is the same unit.

The processing circuitry **102** can control the ECUs **10** in relation to configuration data by executing a series of operations that involve data acquisition, processing, and signal transmission. Initially, the processing circuitry **102** is configured to cause a first ECU to obtain configuration data from a data carrier device. This data is then used to update a virtual data storage that is accessible to all other ECUs **10** via the backbone network **20.** This may involve opening one or more ports to allow GET-requests to retrieve the data, or an upload of the data to the virtual data storage. These different methods may be associated with different advantages. Allowing GET-request to retrieve the data can be faster since the data need not be uploaded, thus offering an efficient replication procedure. The upload of the data can provide traceability and improved security, as data security methods can be put in place for the stored data. A combination of the two can also be envisaged in some cases.

When this is done, the processing circuitry **102** directs the other ECUs **10** to identify the data parts that are relevant to their operation. Each ECU **10** compares the data in the virtual storage with its existing data to determine which parts would cause updates. This identification process ensures that only the necessary updates are applied, reducing redundant data transfers and improving network efficiency. After identifying the data parts, the processing circuitry **102** generates control signals to instruct the ECUs **10** to obtain these specific data parts from the virtual data storage. These control signals are sent via the backbone network **20,** ensuring high speed and reliable data transfer. Upon receiving the control signals, the ECUs **10** access the virtual data storage and download the necessary configuration data.

Throughout the process described above, the processing circuitry **102** may be configured to continuously monitor the data transfer and update operations. The processing circuitry **102** can ensure that each ECU **10** successfully obtains the data parts and applies the updates correctly.

The processing circuitry **102** can be configured to detect one or more errors in the operation relating to replication of configuration data. This may be done by continuous monitoring of anomalies in data consistency, transfer integrity, updates to applications, etc., across the ECUs **10.** For instance, if an ECU **10** fails to retrieve data parts from a virtual data storage, the processing circuitry **102** can detect this by comparing the expected data transfer logs with the actual operations performed.

Exemplary errors might include incomplete data transfers, where the configuration data is only partially downloaded by an ECU **10,** causing it to operate with outdated or incorrect information. Another common error could be data corruption, where the transferred data is altered or damaged during the transfer process, leading to potential malfunctions. Additionally, there could be errors related to signal transmission, such as timeouts or communication failures between the ECUs **10** and the virtual data storage.

Upon detecting such errors, the processing circuitry **102** can issue one or more corrective commands to resolve the issues. For example, if an incomplete data transfer is detected, the processing circuitry **102** can instruct the affected ECU **10** to re-initiate the download process and verify the integrity of the received data. In the case of data corruption, the processing circuitry might command the ECU **10** to discard the corrupted data and request a fresh copy from a virtual data storage. If a signal transmission issue is identified, the processing circuitry **102** can attempt to re-establish the connection or reroute the data transfer through an alternative network path in the backbone network **20,** ensuring that the update process is not disrupted.

The corrective commands may be generated based on one or more predefined error-handling protocols embedded within the processing circuitry's **102** control algorithms. These protocols are designed to address specific types of errors efficiently, reducing downtime and ensuring that the ECUs **10** can resume normal operations with the correct configuration data.

**FIG. 2** is a schematic system diagram of an exemplary data replication procedure. As is seen in the illustration, the processing circuitry **102** is configured to cause control of the first ECU **10-1,** and any number of other ECUs **10-2, 10-n.** While the notations "first" and "other" are used, this is just for purposes of differentiating the ECUs **10.** In effect, this data replication procedure will temporarily cause a first ECU **10-1** (e.g. any of the ECUs **10)** to act as a primary node in the system (master node), while causing one or more other ECUs **(10-2, 10-n,** i.e., any ECU **10** but not the first ECU **10-1),** to act as subordinate nodes (slave nodes). This division of responsibilities is a deliberate design choice made to efficiently manage the data replication process within the marine vessel **1.** By temporarily designating one ECU **10-1** as the primary node and other ECUs **10-2, 10-n** as subordinate nodes, the system centralizes the control of data updates. The primary node handles the initial reception and distribution of configuration data **40,** ensuring that updates are propagated in a coordinated manner. This hierarchical approach can reduce redundancy and network congestion, and ensure that all ECUs **10** is able to consistently and timely receive updates from a single data carrier device **30.** The configuration data **40** stored in the data carrier device **30** is accordingly made available through the first ECU **10-1** updating a virtual data storage **22.**

The first ECU **10-1** shall accordingly be interpreted as a conduit for the other ECUs **10-2, 10-n.** The present disclosure is not limited to having a fixed and predetermined first ECU **10-1,** as the role of the temporary primary node may be changed throughout different data replication procedures as appropriate, as may the roles of subordinate nodes. The below described update procedure refers to a single procedure, which can then be repeated as appropriate, optionally by switching roles where it may be relevant.

Initially, the processing circuitry **102** controls the first ECU **10-1** to update a virtual data storage **22** based on configuration data **40** from a data carrier device **30.** As discussed in examples above, the configuration data **40** in the virtual data storage **22** is made locally accessible to the other ECUs **10-2, 10-n** via the backbone network **20.** Two examples of initializing the update of the virtual data storage **22** are proposed hereinbelow.

In a first example, the data carrier device **30** is a removable storage device, such as a USB, SD card, external hard drive, optical disk, etc. The removable storage device is (physically) connectable to an input port **32** of the first ECU **10-1.** The first ECU **10-1** may be controlled to update the virtual data storage **22** with the configuration data **40** stored in the removable storage device in response to said data carrier device **30** connecting to the first ECU **10-1** via the input port **32.** The processing circuitry **102** controls the first ECU **10-1** to recognize the connection of the removable storage device, and subsequently initiates the data transfer process. This process ensures that the configuration data **40** is distributed from a single point of entry (the first ECU **10-1)** to multiple entries (the other ECUs **10-2, 10-n)** across the marine vessel **1.** The first example may be useful for providing new configuration data **40** into ECUs **10** of the marine vessel **1.** The ability to introduce configuration data **40** through removable storage devices can ensure that the marine vessel **1** can quickly adapt to changes and improvements, maintaining operational standards up to par.

The first example can optionally be complemented by an authentication process of the removable storage device as it connects to the first ECU **10-1.** The first ECU **10-1** may thus confirm the integrity of the removable storage device, which can reduce the risk of malicious actors installing e.g. tampered data on ECUs **10** of the marine vessel **1.**

The first example can for example be carried out by a user manually inserting the removable storage device into the input port **32,** optionally conditioned by a manual confirmation to upload data, for example via an ECU **10** being a display device.

In a second example, the data carrier device **30** is an internal memory of the first ECU **10-1.** This setup can be useful in scenarios where there are multiple related ECUs, for example five ECUs, where one or more of them break down. To replace the broken ECU(s) with new ones and ensure they are up-to-date with the existing configuration data **40** of the system, the system leverages the replication function using an internal memory of one of the remaining operational ECUs.

For instance, one example where two ECUs are broken down and three remains functional can be envisaged. The internal memory of the first ECU **10-1,** which is one of the three existing and functional ECUs, may maintain the most current configuration data **40.** The processing circuitry **102** can accordingly control the first ECU **10-1** to act as the source of this data. The first ECU **10-1** updates the virtual data storage **22** with the configuration data **40** from its internal memory. This virtual data storage **22** is accessible to all ECUs connected to the backbone network **20,** including the newly replaced ECUs. The new ECUs (replacements for the broken ones) can then access the virtual data storage **22** after they have been connected to the backbone network **20** to obtain the necessary configuration data **40.** The processing circuitry **102** directs these new ECUs to identify specific data parts **42** needed to synchronize them with the operational ECUs. This ensures that the new ECUs are brought up to the same configuration level as the existing ones, without the need for introducing new data from an external source. This method can allow for seamless integration and replication of existing data, ensuring continuity and consistency across all ECUs. It can eliminate the need for reintroducing new data from an external device, leveraging the already up-to-date information stored within an internal memory of any operational ECU.

The update of the virtual data storage **22** may be carried out in response to a trigger event. The trigger event may be a manual user input received at an ECU **10** being a display device, a software functionality trigger that automatically identifies the data carrier device **30,** and/or a predetermined time period having lapsed (e.g. a time-based trigger). For instance, a manual user input may be received at an ECU **10** that functions as a display device, where an operator physically interacts with the interface to initiate the update process. Alternatively, a software functionality trigger can automatically identify the connection of a data carrier device **30,** such as when a removable storage device is inserted, prompting the system to begin the update without manual intervention. Additionally, the update process can be set to occur after a predetermined time period has lapsed, ensuring that the ECUs **10** are regularly updated at specified intervals. These various trigger mechanisms can ensure flexibility and reliability in maintaining the configuration data **40,** allowing the system to adapt to different operational needs and schedules.

Once the virtual data storage **22** is updated with configuration data **40,** the processing circuitry **102** controls the other ECUs **10-n** to identify data parts **42** of the configuration data **40** that would cause one or more updates to data stored in said other ECUs **10-n.** This may be done concurrently for a plurality of other ECUs **10-n,** or one or more selected ECUs **10-n,** or for one of them, and optionally followed by a sequence of one or more additional other ECUs **10-n.** The "data parts" **42** refer to individual segments or portions of the complete configuration data **40,** which could include specific settings, software patches, firmware updates, or new user profiles. These parts, when applied, would alter or enhance the existing data stored in the other ECUs **10-n,** ensuring they operate with the most current and accurate information. The phrase "that would cause one or more updates" means that the identified data parts **42,** when applied or installed, would modify or enhance the existing data stored in the other ECUs **10-n,** such as providing a software patch, firmware update, or new user profiles.

Identifying the data parts **42** may involve several steps. Each other ECU **10-n** may receive a message from the virtual data storage **22** indicating the updated configuration data **40.** The other ECU **10-n** may then compare the new configuration data **40** in the virtual data storage **22** with its current stored data, checking each data part to see if it differs from the existing configuration (i.e., if there is an absence of said updated configuration data **40** in memory or not). The other ECU **10-n** evaluates whether the new data part is relevant to its specific functions; for instance, an engine control ECU would look for updates related to engine performance, while a navigation control ECU would focus on route data. The other ECU **10-n** may also check the version of the new data parts **42** against the version it currently holds, optionally flagging data parts **42** with later versions for update. Additionally, the other ECU **10-n** may assess dependencies among data parts **42** to ensure that updating one part does not conflict with other parts or functionalities.

For example, after the first ECU **10-1** updates the virtual data storage **22** with configuration data **40,** the processing circuitry **102** may instruct the other ECUs **10-n** to begin the identification process. Each other ECU **10-n** accesses the virtual data storage **22** and compares the configuration data **40** with its existing data for search of data parts **42** that would cause an update. If the configuration data **40** includes a software patch for the autopilot system, the autopilot ECU will identify this patch as a relevant data part **42.** If the autopilot ECU determines that the new software patch has a later version than the one it currently has, it flags this data part **42** for an update.

This process of identifying data parts **42** may ensure that each other ECU **10-n** only updates the segments of configuration data **40** necessary for its operation, which ultimately can reduce redundant data transfers, improve network efficiency, and ensure that all ECUs **10** operate with the latest and most accurate information.

Once desired data parts **42** has been identified (i.e., that these updates are indeed missing from current storage) by the other ECUs **10-n,** the approach further involves controlling the other ECUs **10-n** to obtain the identified data parts **42** of the configuration data **40** from the virtual data storage **22** in response to a successful access request being sent therebetween. The "access request" refers to a formal request initiated by an other ECU **10-n** to retrieve specific data from the virtual data storage **22,** in this case the identified data parts 42. This request is generated after the other ECU **10-n** has identified the necessary data parts **42** that would cause updates to its existing configuration. The phrase "responsive to a successful access request" means that the virtual data storage **22** acknowledges and grants the access request, allowing the other ECU **10-n** to retrieve the requested data parts **42.** A successful access request indicates that the requested data parts **42** are available and the other ECU **10-n** has the necessary permissions to access and download them.

In detail, once the other ECU **10-n** has identified the relevant data parts **42** it needs, it sends an access request to the virtual data storage **22,** specifying the data parts **42** it wishes to obtain. The virtual data storage **22** processes this request, checks that the data parts **42** are indeed available, and verifies that the same other (requesting) ECU **10-n** has the appropriate permissions. Upon successful verification, the virtual data storage **22** allows the other ECU **10-n** to access and download the specified data parts **42.** The other ECU **10-n** then incorporates these data parts **42** into its system, completing the update process and ensuring it operates with the most current configuration data **40.**

Once the configuration data **40** has been replicated to the other ECUs **10-n** and installed therein, the processing circuitry **102** can be further configured to cause control of the marine vessel 1 via the updated other ECUs **10-n** (and the first ECU **10-1** where applicable).

In some examples, the processing circuitry **102** is further configured to, prior to controlling the other ECUs **10-n** to obtain the data parts **42,** encrypt the data parts **42** stored in the virtual data storage **22** that are to be obtained by the other ECUs **10-n.** This encryption can ensure that only authorized ECUs **10-n** with the correct decryption keys can access the data parts **42,** enhancing the security of the data transfer process. One advantage of this approach is that it allows the system to immediately reject access requests from non-relevant ECUs, without the need to search for updates. This improvement can make the system faster by preventing unnecessary access requests, thereby streamlining the data transfer process and enabling the system to handle more traffic efficiently. As a result, the overall performance and reliability of the marine vessel's electronic systems can be improved. The encryption may be based on encryption schemes known in the art, such as AES-128, AES-192, AES-256, RSA, Triple DES, Blowfish, Twofish, etc.

In an advantageous example, the computer system **100** is designed to operate offline, meaning it does not require an active internet connection to function. The processing circuitry **102** thus controls the ECUs **10** independently of internet connectivity, allowing the system to perform updates, manage configurations, and coordinate data transfers without relying on external network resources. This offline capability can be of importance in marine environments where internet connectivity typically are intermittent, unreliable, or entirely unavailable due to remote locations, adverse weather conditions, or limited infrastructure. By being operable offline, the computer system **100** ensures continuous and efficient operation of the vessel's systems regardless of internet availability. This is achieved using the local backbone network **20** within the vessel **1,** which interconnects all ECUs **10** and the virtual data storage **22.** When configuration data **40** needs to be updated, the processing circuitry **102** directs the first ECU **10-1** to obtain data from the data carrier device **30** according to examples described herein. The first ECU **10-1** then updates the virtual data storage **22,** making the new configuration data **40** accessible to the other ECUs **10-n** via the local backbone network **20.** This procedure is not only reliable, but also reduces the risk of cyber threats that can arise from internet connectivity, as the computer system **100** operates within the local backbone network **20.** It can also save costs, minimize delays, and ensure prompt updating of the ECUs **10.**

The update of the virtual data storage **22** may be done by controlling the first ECU 10-1 to set up a fileserver in the virtual data storage **22,** and transfer the configuration data thereto. The fileserver is a server that stores and manages files, providing access to multiple clients, in this case the other ECUs **10-n,** over the backbone network **20.** When setting up the fileserver, the processing circuitry **102** controls the first ECU **10-1** to initiate the setup within the virtual data storage **22.** The first ECU **10-1** configures the fileserver, setting up the necessary directories and access permissions to store and manage the configuration data **40.** The configuration data **40** from the data carrier device **30** is then transferred to the newly setup fileserver within the virtual data storage **22,** ensuring the data files are accessible to other ECUs **10-n.**

Alternatively, if an existing fileserver is already operational within the virtual data storage **22,** the processing circuitry **102** controls the first ECU **10-1** to access and manage this fileserver to update it with new configuration data **40.** The first ECU **10-1** verifies the integrity and version of the existing configuration data **40** on the fileserver to determine what needs to be updated. The new configuration data **40** from the data carrier device **30** is then transferred to the existing fileserver, replacing outdated files or adding new ones as required. The first ECU **10-1** can ensure that the updated data is properly indexed and accessible to other ECUs **10-n.** The approach of updating the virtual data storage **22** by setting up or updating a fileserver centralizes the configuration data **40,** making it easily accessible to the other ECUs **10-n.** Moreover, additional configuration data **40** or new ECUs **10-n** can easily be accommodated without significant reconfiguration. By using a centralized fileserver, the all other ECUs **10-n** can receive consistent and accurate configuration updates.

When the fileserver starts or receives new configuration data **40,** it may automatically be configured to send out a message on the backbone network **20** indicating this, whereupon the other ECUs **10** continues with the identification and obtaining of data parts **42.**

The fileserver may comprise a link that is accessible by the other ECUs **10-n.** This setup may allow the first ECU **10-1** to act as an intermediary, hosting the fileserver and providing a direct link to the configuration data **40.** When updates are due, the fileserver updates, typically on an automatic basis, its contents with the configuration data **40,** creating a link that the other ECUs **10-n** can access over the backbone network **20.** This link can enable the other ECUs **10-n** to directly retrieve the necessary data parts **42** with a minimum delay.

As further seen in **FIG. 2****,** the backbone network **20** may comprise a switching device **50.** The switching device **50** interfaces the first ECU **10-1** (or the virtual data storage **22** set up by said first ECU **10-1),** and the other ECUs **10-n.** The switching device **50** is configured to relay the access requests sent between the other ECUs **10-n** and the virtual data storage **22.** The features of the switching device **50** can vary depending on the type of backbone network **20** employed. For example, if an Ethernet backbone network is used, the switching device **50** would be an Ethernet switch, which manages data traffic by directing packets to their intended recipients. This setup can enhance the reliability and efficiency of the data replication process by ensuring that all ECUs **10** can communicate seamlessly with the virtual data storage **22.**

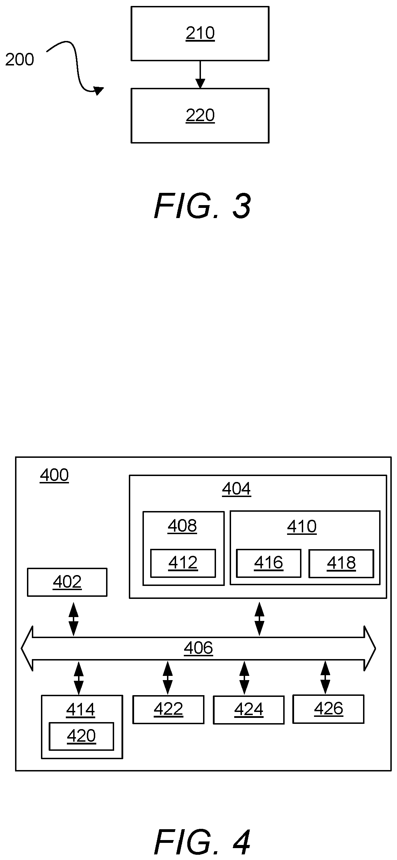

**FIG. 3** is a flowchart of a computer-implemented method **200** for replicating data among a plurality of ECUs, wherein the ECUs are connected to the same backbone network of a marine vessel. The method 200 comprises a step of controlling **210,** by processing circuitry of a computer system, a first ECU from among the plurality of ECUs to update a virtual data storage based on configuration data from a data carrier device, the virtual data storage being locally accessible by one or more other ECUs from among the plurality of ECUs via the backbone network. The method **200** further comprises a step of controlling **220,** by the processing circuitry, the other ECUs to identify data parts of the configuration data that would cause one or more updates to data stored by said other ECUs, and obtain said one or more data parts of the configuration data responsive to a successful access request between said other ECUs and the virtual data storage.

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or j ointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or j ointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus 406 may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100; 400) for replicating data among a plurality of electronic control units, ECUs (10), wherein the ECUs (10) are connected to the same backbone network (20) of a marine vessel (1), the computer system (100; 400) comprising processing circuitry (102; 402) configured to:
control a first ECU (10-1) from among the plurality of ECUs (10) to:
- update a virtual data storage (22) of the computer system (100; 400) with configuration data (40) stored in a data carrier device (30), the virtual data storage (22) being locally accessible by one or more other ECUs (10-n) from among the plurality of ECUs (10) via the backbone network (20); and
control said other ECUs (10-n) to:
- identify data parts (42) of the configuration data (40) that would cause one or more updates to data stored by said other ECUs (10-n), and
- obtain said one or more data parts (42) of the configuration data (40) via the backbone network (20) responsive to a successful access request between said other ECUs (10-n) and the virtual data storage (22).

2. The computer system (100; 400) of claim 1, wherein the computer system (100; 400) is operable offline, the processing circuitry (102; 402) being operable to carry out the control of the ECUs (10) agnostic to internet connectivity.

3. The computer system (100; 400) of any of claims 1-2, wherein the processing circuitry (102; 402) is configured to control the first ECU (10-1) to update the virtual data storage (22) by:
setting up a fileserver in the virtual data storage (22) and transferring the configuration data (40) thereto, or
updating an existing fileserver in the virtual data storage (22) with the configuration data (40).

4. The computer system (100; 400) of claim 3, wherein fileserver comprises a link accessible by said other ECUs (10-n) to the configuration data (40) stored in the data carrier device (30).

5. The computer system (100; 400) of any of claims 1-4, wherein the control of said other ECUs (10-n) to identify the data parts (42) comprises, at said other ECUs (10-n):
receiving a message from the virtual data storage (22) indicating said update of the configuration data (40);
identifying an absence of said update in a memory of said other ECUs (10-n); and
controlling submission of said access request to the virtual data storage (22).

6. The computer system (100; 400) of any of claims 1-5, wherein the processing circuitry (102; 402) is further configured to, prior to controlling the other ECUs (10-n) to obtain the data parts (42), encrypt the data parts (42) stored in the virtual data storage (22) that is to be obtained by the other ECUs (10-n).

7. The computer system (100; 400) of any of claims 1-6, wherein the data carrier device (30) is a removable storage device connectable to an input port (32) of the first ECU (10-1), wherein the processing circuitry (102; 402) is configured to control the first ECU (10-1) to update the virtual data storage (22) with the configuration data (40) in response to said data carrier device (30) connecting to the first ECU (10-1).

8. The computer system (100; 400) of any of claims 1-7, wherein the data carrier device (30) is an internal memory of the first ECU (10-1).

9. The computer system (100; 400) of any of claims 1-8, wherein the processing circuitry (102; 402) is configured to control the first ECU (10-1) to update the virtual data storage (22) in response to one or more of:
a manual user input received at an ECU (10) being a display device,
a software functionality trigger automatically identifying the data carrier device (30), and
a predetermined time period having lapsed.

10. The computer system (100; 400) of any of claims 1-9, wherein the configuration data (40) comprises one or more of software update data, firmware update data, user profile data, system data, diagnostic data, security patch data, operational data, calibration data, application data, and performance tuning data.

11. A marine vessel (1) comprising the computer system (100; 400) of any of claims 1-10.

12. The marine vessel (1) of claim 11, further comprising one or more ECUs (10) being connected to the same backbone network (20) of the marine vessel (1), wherein the backbone network (20) is based on Ethernet, and wherein the ECUs (10) are wiredly connected to the backbone network (20).

13. A computer-implemented method (200) for replicating data among a plurality of electronic control units, ECUs (10), wherein the ECUs (10) are connected to the same backbone network (20) of a marine vessel (1), the method (200) comprising:
controlling (210), by processing circuitry (102; 402) of a computer system (100; 400), a first ECU (10-1) from among the plurality of ECUs (10) to update a virtual data storage (22) of the computer system (100; 400) with configuration data (40) stored in a data carrier device (30), the virtual data storage (22) being locally accessible by one or more other ECUs (10-n) from among the plurality of ECUs (10) via the backbone network (20); and
controlling (220), by the processing circuitry (102; 402), the other ECUs (10-n) to identify data parts (42) of the configuration data (40) that would cause one or more updates to data stored by said other ECUs (10-n), and obtain said one or more data parts (42) of the configuration data (40) via the backbone network (20) responsive to a successful access request between said other ECUs (10-n) and the virtual data storage (22).

14. A computer program product comprising program code for performing, when executed by the processing circuitry (102; 402), the method (200) of claim 13.

15. A non-transitory computer-readable storage medium comprising instructions, which when executed by the processing circuitry (102; 402), cause the processing circuitry (102; 402) to perform the method (200) of claim 13.

## Patentansprüche

1. Ein Computersystem (100; 400) zum Replizieren von Daten zwischen einer Vielzahl von elektronischen Steuergeräten, ECUs (10), wobei die ECUs (10) mit demselben Backbone-Netzwerk (20) eines Schiffes (1) verbunden sind, wobei das Computersystem (100; 400) eine Verarbeitungsschaltung (102; 402) umfasst, die konfiguriert ist, um:
ein erstes ECU (10-1) aus der Vielzahl der ECUs (10) zu steuern, um:
- einen virtuellen Datenspeicher (22) des Computersystems (100; 400) mit Konfigurationsdaten (40) zu aktualisieren, die in einem Datenträgermedium (30) gespeichert sind, wobei der virtuelle Datenspeicher (22) von einer oder mehreren anderen ECUs (10-n) aus der Vielzahl der ECUs (10) über das Backbone-Netzwerk (20) lokal zugänglich ist; und
die genannten anderen ECUs (10-n) zu steuern, um:
- Datenanteile (42) der Konfigurationsdaten (40) zu identifizieren, die eine oder mehrere Aktualisierungen von Daten verursachen würden, die von den genannten anderen ECUs (10-n) gespeichert werden, und
- die genannten einen oder mehreren Datenanteile (42) der Konfigurationsdaten (40) als Reaktion auf eine erfolgreiche Zugriffsanfrage zwischen den genannten anderen ECUs (10-n) und dem virtuellen Datenspeicher (22) über das Backbone-Netzwerk (20) abzurufen.

2. Das Computersystem (100; 400) gemäß Anspruch 1, wobei das Computersystem (100; 400) offline betrieben werden kann, wobei die Verarbeitungsschaltung (102; 402) so betrieben werden kann, dass sie die Steuerung der ECUs (10) unabhängig von der Internetverbindung durchführt.

3. Das Computersystem (100; 400) gemäß einem der Ansprüche 1-2, wobei die Verarbeitungsschaltung (102; 402) konfiguriert ist, um das erste ECU (10-1) zu steuern, um den virtuellen Datenspeicher (22) zu aktualisieren, durch:
- Einrichten eines Dateiservers im virtuellen Datenspeicher (22) und Übertragen der Konfigurationsdaten (40) dorthin, oder
- Aktualisieren eines bestehenden Dateiservers im virtuellen Datenspeicher (22) mit den Konfigurationsdaten (40).

4. Das Computersystem (100; 400) gemäß Anspruch 3, wobei der Dateiserver eine Verbindung umfasst, die für die genannten anderen ECUs (10-n) zugänglich ist, zu den Konfigurationsdaten (40), die im Datenträgermedium (30) gespeichert sind.

5. Das Computersystem (100; 400) gemäß einem der Ansprüche 1-4, wobei die Steuerung der genannten anderen ECUs (10-n) zur Identifizierung der Datenanteile (42) bei den genannten anderen ECUs (10-n) Folgendes umfasst:
- Empfangen einer Nachricht vom virtuellen Datenspeicher (22), die eine Aktualisierung der Konfigurationsdaten (40) anzeigt;
- Identifizieren eines Fehlens der Aktualisierung in einem Speicher der genannten anderen ECUs (10-n); und
- Steuern der Übermittlung der Zugriffsanfrage an den virtuellen Datenspeicher (22).

6. Das Computersystem (100; 400) gemäß einem der Ansprüche 1-5, wobei die Verarbeitungsschaltung (102; 402) ferner konfiguriert ist, um, bevor die anderen ECUs (10-n) gesteuert werden, die Datenanteile (42) abzurufen, die Datenanteile (42) zu verschlüsseln, die im virtuellen Datenspeicher (22) gespeichert sind und die von den anderen ECUs (10-n) abgerufen werden sollen.

7. Das Computersystem (100; 400) gemäß einem der Ansprüche 1-6, wobei das Datenträgermedium (30) ein abnehmbares Speichermedium ist, das mit einem Eingangsport (32) des ersten ECUs (10-1) verbunden werden kann, wobei die Verarbeitungsschaltung (102; 402) konfiguriert ist, um das erste ECU (10-1) zu steuern, um den virtuellen Datenspeicher (22) mit den Konfigurationsdaten (40) zu aktualisieren, als Reaktion darauf, dass das Datenträgermedium (30) mit dem ersten ECU (10-1) verbunden wird.

8. Das Computersystem (100; 400) gemäß einem der Ansprüche 1-7, wobei das Datenträgermedium (30) ein interner Speicher des ersten ECUs (10-1) ist.

9. Das Computersystem (100; 400) gemäß einem der Ansprüche 1-8, wobei die Verarbeitungsschaltung (102; 402) konfiguriert ist, um das erste ECU (10-1) zu steuern, um den virtuellen Datenspeicher (22) als Reaktion auf eines oder mehrere der Folgenden zu aktualisieren:
- Eine manuelle Benutzereingabe, die an ein ECU (10) empfangen wird, das ein Anzeigegerät ist,
- Eine Softwarefunktionalität, die automatisch das Datenträgermedium (30) erkennt, und
- Ein Ablauf einer voreingestellten Zeitspanne.

10. Das Computersystem (100; 400) gemäß einem der Ansprüche 1-9, wobei die Konfigurationsdaten (40) einen oder mehrere der folgenden Elemente umfassen: Software-Update-Daten, Firmware-Update-Daten, Benutzerdaten, Systemdaten, Diagnosedaten, Sicherheits-Patch-Daten, Betriebsdaten, Kalibrierdaten, Anwendungsdaten und Leistungsoptimierungsdaten.

11. Ein Schiff (1), umfassend das Computersystem (100; 400) gemäß einem der Ansprüche 1-10.

12. Das Schiff (1) gemäß Anspruch 11, ferner umfassend ein oder mehrere ECUs (10), die mit demselben Backbone-Netzwerk (20) des Schiffs (1) verbunden sind, wobei das Backbone-Netzwerk (20) auf Ethernet basiert und wobei die ECUs (10) kabelgebunden mit dem Backbone-Netzwerk (20) verbunden sind.

13. Ein computerimplementiertes Verfahren (200) zum Replizieren von Daten zwischen einer Vielzahl von elektronischen Steuergeräten, ECUs (10), wobei die ECUs (10) mit demselben Backbone-Netzwerk (20) eines Schiffes (1) verbunden sind, wobei das Verfahren (200) Folgendes umfasst:
Steuern (210), durch eine Verarbeitungsschaltung (102; 402) eines Computersystems (100; 400), eines ersten ECUs (10-1) aus der Vielzahl der ECUs (10), um einen virtuellen Datenspeicher (22) des Computersystems (100; 400) mit Konfigurationsdaten (40) zu aktualisieren, die in einem Datenträgermedium (30) gespeichert sind, wobei der virtuelle Datenspeicher (22) von einer oder mehreren anderen ECUs (10-n) aus der Vielzahl der ECUs (10) über das Backbone-Netzwerk (20) lokal zugänglich ist; und
Steuern (220), durch die Verarbeitungsschaltung (102; 402), der anderen ECUs (10-n), um Datenanteile (42) der Konfigurationsdaten (40) zu identifizieren, die eine oder mehrere Aktualisierungen von Daten verursachen würden, die von den genannten anderen ECUs (10-n) gespeichert werden, und die genannten einen oder mehreren Datenanteile (42) der Konfigurationsdaten (40) als Reaktion auf eine erfolgreiche Zugriffsanfrage zwischen den genannten anderen ECUs (10-n) und dem virtuellen Datenspeicher (22) über das Backbone-Netzwerk (20) abzurufen.

14. Ein Computerprogrammprodukt, das Programmcode umfasst, um, wenn es von der Verarbeitungsschaltung (102; 402) ausgeführt wird, das Verfahren (200) gemäß Anspruch 13 auszuführen.

15. Ein nicht-flüchtiges, computerlesbares Speichermedium, das Anweisungen umfasst, die, wenn sie von der Verarbeitungsschaltung (102; 402) ausgeführt werden, die Verarbeitungsschaltung (102; 402) veranlassen, das Verfahren (200) gemäß Anspruch 13 auszuführen.

## Revendications

1. Un système informatique (100 ; 400) pour répliquer des données parmi une pluralité d'unités de commande électroniques, ECU (10), dans lequel les ECU (10) sont connectées au même réseau fédérateur (20) d'un navire marin (1), le système informatique (100 ; 400) comprenant une circuiterie de traitement (102 ; 402) configurée pour :
- commander une première ECU (10-1) parmi la pluralité d'ECU (10) pour :
- mettre à jour un stockage de données virtuel (22) du système informatique (100 ; 400) avec des données de configuration (40) stockées dans un dispositif support de données (30), le stockage de données virtuel (22) étant accessible localement par une ou plusieurs autres ECU (10-n) parmi la pluralité d'ECU (10) via le réseau fédérateur (20), et commander lesdites autres ECU (10-n) pour :
- identifier des parties de données (42) des données de configuration (40) qui provoqueraient une ou plusieurs mises à jour de données stockées par lesdites autres ECU (10-n), et
- obtenir lesdites une ou plusieurs parties de données (42) des données de configuration (40) via le réseau fédérateur (20) en réponse à une demande d'accès réussie entre lesdites autres ECU (10-n) et le stockage de données virtuel (22).

2. Le système informatique (100 ; 400) de la revendication 1, dans lequel le système informatique (100 ; 400) est exploitable hors ligne, la circuiterie de traitement (102 ; 402) étant exploitable pour effectuer la commande des ECU (10) de manière agnostique vis-à-vis de la connectivité Internet.

3. Le système informatique (100 ; 400) de l'une quelconque des revendications 1 à 2, dans lequel la circuiterie de traitement (102 ; 402) est configurée pour commander la première ECU (10-1) afin de mettre à jour le stockage de données virtuel (22) en :
- mettant en place un serveur de fichiers dans le stockage de données virtuel (22) et en transférant les données de configuration (40) vers celui-ci, ou
- mettant à jour un serveur de fichiers existant dans le stockage de données virtuel (22) avec les données de configuration (40).

4. Le système informatique (100 ; 400) de la revendication 3, dans lequel le serveur de fichiers comprend un lien accessible par lesdites autres ECU (10-n) vers les données de configuration (40) stockées dans le dispositif support de données (30).

5. Le système informatique (100 ; 400) de l'une quelconque des revendications 1 à 4, dans lequel la commande desdites autres ECU (10-n) pour identifier les parties de données (42) comprend, au niveau desdites autres ECU (10-n) :
recevoir un message depuis le stockage de données virtuel (22) indiquant ladite mise à jour des données de configuration (40) ;
identifier une absence de ladite mise à jour dans une mémoire desdites autres ECU (10-n) ; et commander la soumission de ladite demande d'accès au stockage de données virtuel (22).

6. Le système informatique (100 ; 400) de l'une quelconque des revendications 1 à 5, dans lequel la circuiterie de traitement (102 ; 402) est en outre configurée pour, avant de commander les autres ECU (10-n) afin d'obtenir les parties de données (42), chiffrer les parties de données (42) stockées dans le stockage de données virtuel (22) qui doit être obtenu par les autres ECU (10-n).

7. Le système informatique (100 ; 400) de l'une quelconque des revendications 1 à 6, dans lequel le dispositif support de données (30) est un dispositif de stockage amovible connectable à un port d'entrée (32) de la première ECU (10-1), dans lequel la circuiterie de traitement (102 ; 402) est configurée pour commander la première ECU (10-1) afin de mettre à jour le stockage de données virtuel (22) avec les données de configuration (40) en réponse audit dispositif support de données (30) se connectant à la première ECU (10-1).

8. Le système informatique (100 ; 400) de l'une quelconque des revendications 1 à 7, dans lequel le dispositif support de données (30) est une mémoire interne de la première ECU (10-1).

9. Le système informatique (100 ; 400) de l'une quelconque des revendications 1 à 8, dans lequel la circuiterie de traitement (102 ; 402) est configurée pour commander la première ECU (10-1) afin de mettre à jour le stockage de données virtuel (22) en réponse à un ou plusieurs parmi :
- une entrée utilisateur manuelle reçue au niveau d'une ECU (10) étant un dispositif d'affichage,
- un déclencheur de fonctionnalité logicielle identifiant automatiquement le dispositif support de données (30), et
- une période temporelle prédéterminée s'étant écoulée.

10. Le système informatique (100 ; 400) de l'une quelconque des revendications 1 à 9, dans lequel les données de configuration (40) comprennent un ou plusieurs parmi des données de mise à jour logicielle, des données de mise à jour de micrologiciel, des données de profil utilisateur, des données système, des données de diagnostic, des données de correctif de sécurité, des données opérationnelles, des données d'étalonnage, des données d'application, et des données de réglage de performance.

11. Un navire marin (1) comprenant le système informatique (100 ; 400) de l'une quelconque des revendications 1 à 10.

12. Le navire marin (1) de la revendication 11, comprenant en outre une ou plusieurs ECU (10) étant connectées au même réseau fédérateur (20) du navire marin (1), dans lequel le réseau fédérateur (20) est basé sur Ethernet, et dans lequel les ECU (10) sont connectées de manière filaire au réseau fédérateur (20).

13. Un procédé mis en œuvre par ordinateur (200) pour répliquer des données parmi une pluralité d'unités de commande électroniques, ECU (10), dans lequel les ECU (10) sont connectées au même réseau fédérateur (20) d'un navire marin (1), le procédé (200) comprenant : commander (210), par une circuiterie de traitement (102 ; 402) d'un système informatique (100 ; 400), une première ECU (10-1) parmi la pluralité d'ECU (10) pour mettre à jour un stockage de données virtuel (22) du système informatique (100 ; 400) avec des données de configuration (40) stockées dans un dispositif support de données (30), le stockage de données virtuel (22) étant accessible localement par une ou plusieurs autres ECU (10-n) parmi la pluralité d'ECU (10) via le réseau fédérateur (20) ; et commander (220), par la circuiterie de traitement (102 ; 402), les autres ECU (10-n) pour identifier des parties de données (42) des données de configuration (40) qui provoqueraient une ou plusieurs mises à jour de données stockées par lesdites autres ECU (10-n), et obtenir lesdites une ou plusieurs parties de données (42) des données de configuration (40) via le réseau fédérateur (20) en réponse à une demande d'accès réussie entre lesdites autres ECU (10-n) et le stockage de données virtuel (22).

14. Un produit programme d'ordinateur comprenant un code de programme pour effectuer, lorsqu'il est exécuté par la circuiterie de traitement (102 ; 402), le procédé (200) de la revendication 13.

15. Un support de stockage non transitoire lisible par ordinateur comprenant des instructions, qui lorsqu'elles sont exécutées par la circuiterie de traitement (102 ; 402), amènent la circuiterie de traitement (102 ; 402) à effectuer le procédé (200) de la revendication 13.
